# EUROPÄISCHE PATENTANMELDUNG

(11) **EP 1 780 365 A1**
(43) Veröffentlichungstag der Anmeldung: **02.05.2007**
(21) Anmeldenummer: 06022120.7
(22) Anmeldetag: 23.10.2006
(51) Int. Cl.: E06B 3/30, B29C 47/06

(54) **Extrudiertes Profil**

(30) Priorität: 29.10.2005 DE 102005051957
(71) Anmelder: Cohen, Claude, 93110 Rosny S/Bois (FR); Barrain Sarl, 50140 Mortain (FR)
(72) Erfinder: Cohen, Claude, 93110 Rosny S/Bois (FR)
(74) Vertreter: Gosdin, Michael

(57) **Zusammenfassung**

Die Erfindung betrifft ein Co-extrudiertes Profil, das mindestens einen ersten Kunststoff (1) und einen zweite Kunststoff (2) umfasst, wobei der erste Kunststoff (1) die Kernkomponente und der zweite Kunststoff (2) eine Deckschicht (3) des Profils bildet. Erfindungsgemäß ist vorgesehen, dass der die Deckschicht (3) bildende zweite Kunststoff (2) ein Gemisch aus Kunststoff und Holz ist.

## Beschreibung

Die Erfindung betrifft ein co-extrudiertes Profil, das mindestens einen ersten Kunststoff und einen zweiten Kunststoff umfasst, wobei der erste Kunststoff die Kernkomponente und der zweite Kunststoff eine Deckschicht des Profils bildet.

Gattungsgemäße Profile sind im Stand der Technik bekannt. So beschreibt beispielsweise die DE 43 37 832 A1 eine Extrusionsanlage, bei der über einen Hauptextruder und einen Co-Extruder Produkte wie Rohre, Profile, Platten, Folien etc. erzeugt werden können. Charakteristisch ist dabei, dass über den Co-Extruder ein Flüssiglack beigegeben wird, um die Oberfläche des Produktes zu veredeln.

Bei diesen bekannten Verfahren wird die zweite, als Außenschicht verwendete Kunststoffkomponente meist eingefärbt, um dem Profil das gewünschte Aussehen zu verschaffen. Die vorwiegend zu Fenstern verarbeiteten Profile behalten aber ihr "künstliches" Aussehen. Es ist nicht möglich, eine Nachbildung der sonst weit verbreiteten Holzfenster zu schaffen.

Andere Produkte, wie Terrassenbeplankungen oder ähnliches, bestehen meist aus Naturholz oder aus Kunststoff. Die bekannten Kunststoffpaneele, auch als decking bekannt, sind aus einem einzigen Kunststoff und bieten daher nicht die Möglichkeit der typischen Holzstruktur. Anbieter solcher Deckings sind zum Beispiel die Firmen Trex Company, Inc - UK oder Brite Manufacturing Inc. CA.

Aufgabe der vorliegenden Erfindung ist es daher, ein Produkt anzubieten, das in seinem optischen Erscheinungsbild dem von Holz sehr nahe kommt.

Die Lösung der Aufgabe ist in Verbindung mit dem Oberbegriff des Anspruchs 1 ist dadurch gekennzeichnet, dass der die Deckschicht bildende zweite Kunststoff ein Gemisch aus Kunststoff und Holz ist.

Durch ein solches Gemisch wird es ermöglicht, auf der Deckschicht des Profiles eine typische Holzstruktur zu erzeugen. Durch entsprechende Farbzumischungen ist quasi jeder Holztyp nachbildbar.

Durch diesen Aufbau ist es relativ einfach, einen Kern und damit den ersten Kunststoff derart auszuführen, dass dieser ein Regenerat oder Recyclat ist.

Besonders vorteilhaft ist es, wenn im Kernmaterial Zusatzstoffe wie Flammschutzmittel eingebunden sind. Es kann somit eine verstärkte Rauchentwicklung oder eine Erzündung an sich vermindert werden.

Der zweite Kunststoff ist weiterbildungsgemäß ein Gemisch aus PVC und Holzspänen oder Holzmehl, kann aber auch ein Gemisch aus PE oder PP und Holzspänen oder Holzmehl sein. Durch diese Vermischung mit Holz, es können durchaus Holzabfälle aus einer Schreinerei oder ähnlichem sein, wird eine relativ genaue Abbildung der naturellen Holzstruktur erreicht.

Besonders vorteilhaft ist es, wenn das Kunststoff/Holz-Gemisch des zweiten Kunststoffes bereits in einem Extruder erzeugbar ist. Dadurch kann das fertige Produkt mit der Grundkomponente, dem Kern, in einem gemeinsamen Verfahren erzeugt werden. Das Gemisch sollte in einem reproduzierbaren Verhältnis zu einander stehen, wobei unterschiedliche Aufteilungen je nach Grad der gewünschten Holzoptik denkbar sind. Das Verhältnis kann zwischen 1:1 bis 1:20 oder höher liegen. Erste Versuche haben recht gute Ergebnisse gezeigt, wenn die Aufteilung des Kunststoff/Holz-Gemisches in einem Verhältnis von 1:4 aufgeteilt ist.

Der größte Einsatz wird dem Profil als Paneel, insbesondere ein Paneel als Fußbodenbelag, zugemessen. Hier liegt der große Vorteil darin, dass quasi jedes Recyclat oder Regenerat als Kernmaterial eingesetzt werden kann und nur noch für die relativ dünne Deckschicht ein hochwertigeres und teureres Reinmaterial zum Einsatz gelangt. Durch die holzartige Optik wird ein anschauliches Produkt angeboten.

Im Profil können bereits Vorsprünge oder auch Hinterschnitte für Verbindungselemente oder Befestigungsmaterial der Paneele eingebunden werden.

Wie bereits oben erwähnt bietet es sich an, das Profil mittels des Co-Etrusionsverfahrens herzustellen, welches hier kurz beschrieben wird.

Es umfasst die Schritte: Aufschmelzen einer ersten Kunststoffmasse in einem ersten Extruder, Aufschmelzen einer zweiten Kunststoffmasse in einem zweiten Extruder, getrennte Zuführung der beiden Kunststoffmassen in ein Kunststoffwerkzeug, Extrudieren beider Kunststoffmassen zu einem Profil, wobei die erste Kunststoffmasse die Kernkomponente und die zweite Kunststoffmasse eine Deckschicht des Profils bildet, Kalibrieren des Profils in einem geeigneten Kalibrator, wobei die die Deckschicht bildende zweite Kunststoffmasse ein Gemisch aus Kunststoff und Holz ist.

Vorteilhafterweise wird die als Kernkomponente eingesetzte erste Kunststoffmasse aus einem Regenerat oder Recyclat gebildet. Somit ist es möglich, einen großen Prozentsatz der Profilmasse mit einem kostengünstigen Material zu fertigen. Besonders gute Ergebnisse werden erzielt, wenn für das Gemisch der zweiten Kunststoffmasse ein Gemisch aus PVC, PP, PE oder einem anderen geeigneten Kunststoff mit Holzspänen oder Holzmehr verwendet wird. Hierbei kann die Mischung direkt im Extruder erfolgen oder ein fertiges Gemisch als Granulat dem Extruder zugefügt werden. Es wird vorgeschlagen, den Kunststoff in einem Verhältnis von 80% zu 20% zum Holz zu mischen, es ist aber kein Problem, auch andere Mischungsverhältnisse anzustreben und gute Ergebnisse zu erzielen.

Über einen weiteren, einen dritten Extruder, kann eine dritte Deckschicht direkt mit aufgebracht werden. Diese Deckschicht ist vorzugsweise transparent und aus einem Kunststoff, der wie eine Schutzschicht wirkt. Die Schutzschicht dient dazu, das Profil gegen Außeneinflüsse zu schützen, weshalb sie insbesondere mit einem UV-Stabilisator versehen wird. Selbstverständlich können auch weitere Stabilisatoren beigemischt werden.

Mit der Deckschicht kann theoretisch das gesamte Profil überzogen werden. Vorteilhafterweise werden aber nur partielle Teilbereiche mit dieser Deckschicht versehen, vorzugsweise die Sichtseiten.

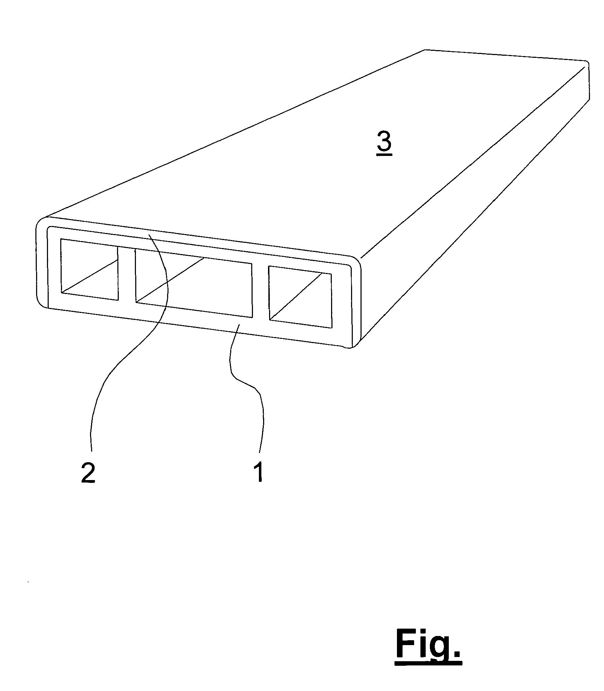

Die Zeichnung zeigt beispielhaft ein Profil im Querschnitt, wobei der Kern des Profils aus einem ersten Kunststoff 1 besteht, welches aus Regenerat oder Recyclat bestehen kann. Die Außenschicht besteht teilweise aus einer Deckschicht 3, die aus einem zweiten Kunststoff 2 gebildet wird, wobei dieser zweite Kunststoff 2 ein Gemisch aus Kunststoff und Holz ist.

Die dargelegte Erfindung ermöglicht es, Kunststoffprofile, insbesondere Fußbodenbeläge oder Paneele, mit einer Deckschicht zu versehen, die vom äußeren Erscheinungsbild einer Holzdiele sehr nahe kommt, da echte Holzteile in der Deckschicht eingebunden sind.

### Bezugszeichenliste

- 1: erster Kunststoff
- 2: zweiter Kunststoff
- 3: Deckschicht

## Patentansprüche

1. Co-extrudiertes Profil, das mindestens einen ersten Kunststoff (1) und einen zweiten Kunststoff (2) umfasst, wobei der erste Kunststoff (1) die Kernkomponente und der zweite Kunststoff (2) eine Deckschicht (3) des Profils bildet,
**dadurch gekennzeichnet, dass**
der die Deckschicht (3) bildende zweite Kunststoff (2) ein Gemisch aus Kunststoff und Holz ist.

2. Co-extrudiertes Profil nach Anspruch 1, **dadurch gekennzeichnet, dass** der erste Kunststoff (1) ein Regenerat oder Recyclat ist.

3. Co-extrudiertes Profil nach Anspruch 1 oder 2, **dadurch gekennzeichnet, dass** im ersten Kunststoff (1) Zusatzstoffe wie Flammschutzmittel eingebunden sind.

4. Co-extrudiertes Profil nach Anspruch 1, 2 oder 3, **dadurch gekennzeichnet, dass** das Gemisch des zweiten Kunststoffes (2) ein Gemisch aus PVC und Holzspänen oder Holzmehl ist.

5. Co-extrudiertes Profil nach Anspruch 1, 2 oder 3, **dadurch gekennzeichnet, dass** das Gemisch des zweiten Kunststoffes (2) ein Gemisch aus Polyethylen (PE) oder Polypropylen (PP) und Holzspänen oder Holzmehl ist.

6. Co-extrudiertes Profil nach einem der vorigen Ansprüche, **dadurch gekennzeichnet, dass** das Kunststoff/Holz-Gemisch des zweiten Kunststoffes (2) in einem Extruder erzeugbar ist.

7. Co-extrudiertes Profil nach einem der vorigen Ansprüche, **dadurch gekennzeichnet, dass** die Aufteilung des Kunststoff/Holz-Gemisches in einem Verhältnis von 1:1 bis 1:20 oder höher, vorzugsweise 1:4, aufgeteilt ist.

8. Co-extrudiertes Profil nach einem der vorigen Ansprüche, **dadurch gekennzeichnet, dass** das Profil ein Paneel, insbesondere ein Paneel als Fußbodenbelag ist.
